# EUROPEAN PATENT SPECIFICATION

(11) **EP 0 475 480 B1**
(45) Date of publication and mention of the grant of the patent: **13.03.1996**
(21) Application number: 91202058.3
(22) Date of filing: 13.08.1991
(51) Int. Cl.: A01B 49/02, A01B 73/04

(54) **A soil cultivating machine**
Bodenbearbeitungsmaschine
Machine à travail du sol

(30) Priority: 24.08.1990 NL 9001873
(43) Date of publication of application: 18.03.1992
(60) Divisional application: 95201725.9
(73) Proprietor: C. van der Lely N.V., NL-3155 PD Maasland (NL)
(72) Inventor: Bom, Cornelis Johannes Gerardus, NL-3181 VC Rozenburg (NL); Ouwerkerk, Cornelis Gerardus, NL-3181 BE Rozenburg (NL)
(74) Representative: Mulder, Herman

(56) References cited:
- EP-A- 59 520
- DE-A- 3 535 627
- FR-A- 2 193 534
- GB-A- 2 187 623
- NL-A- 7 611 397
- NL-C- 93 466
- US-A- 4 249 616
- US-A- 4 399 875

## Description

The present invention relates to a soil cultivating machine comprising a frame and frame portions which are provided with soil working members, the frame consisting of a central section and at least two further sections, which further sections, taken in the direction of operative travel of the machine, are connected on either side of the central section via a shaft to said central section and are movable in height about the said shaft, and to each of which further sections there is connected via a hingeable carrier structure extending lengthwise in the direction of operative travel, a frame portion with soil working members.

A suchlike machine is e.g. known from the European Patent Application 0059520. Although the machine according to this document performs comparatively well, still further sophistications can be brought into the machine. According to the invention one such sophistication is characterized in that a vertically movable frame section is connected to the relevant frame portion with soil working members via a length adjustable stabilizer rod which extends substantially transversely to the intended direction of operative travel of the machine and substantially in the elongate direction of the said frame section and of the said frame part. By means of a suchlike construction the frame portion with soil working members can, during operation, effectively be stabilized in its longitudinal direction, while keeping its freedom of movement in vertical direction relative to the related frame part and, during transport, additionally be supported so as to relieve the carrier structure for the frame portion with soil working members.

For a better understanding of the invention and to show how the same may be carried into effect, reference will now be made, by a way of example, to the accompanying drawings, in which:

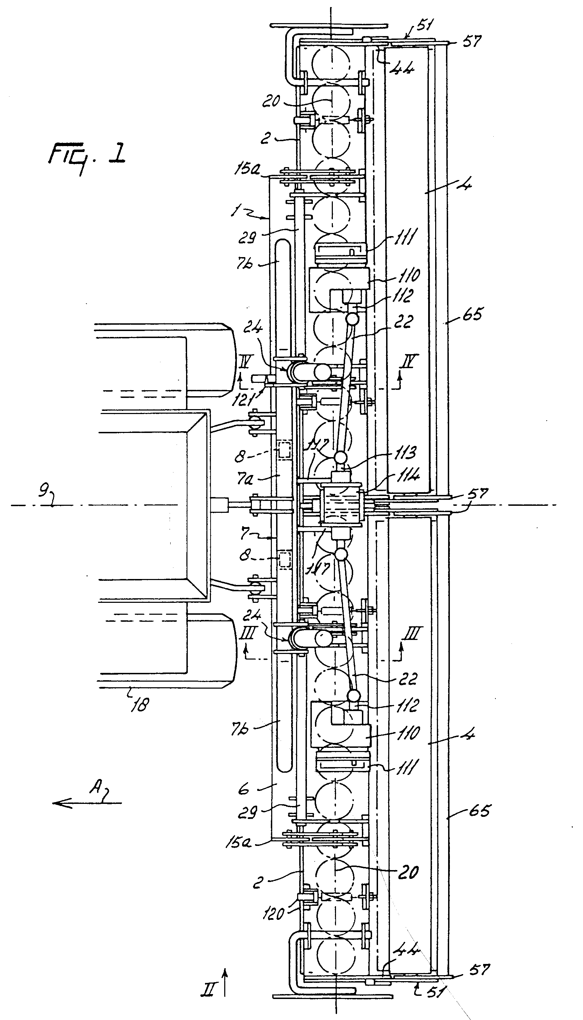

Figure 1 is a plan view of a soil cultivating machine, in this case a rotary harrow, coupled to a tractor, which machine is suitable for a seed drill to be coupled thereto;

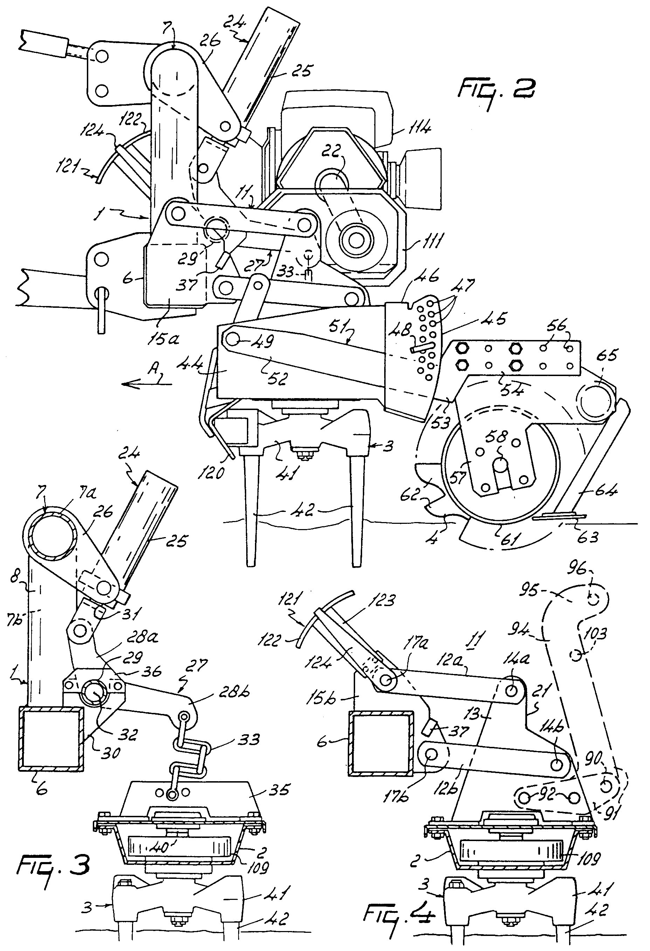

Figure 2 is a side view of the soil cultivating machine, taken in the direction of the arrow II in Figure 1;
Figure 3 is a cross-sectional view of part of the soil cultivating machine, taken on the line III-III in Figure 1;
Figure 4 is a cross-sectional view of part of the soil cultivating machine, taken on the line IV-IV in Figure 1;
Figure 5 is a side view of the soil cultivating machine according to Figure 1, a seed drill being coupled thereto;

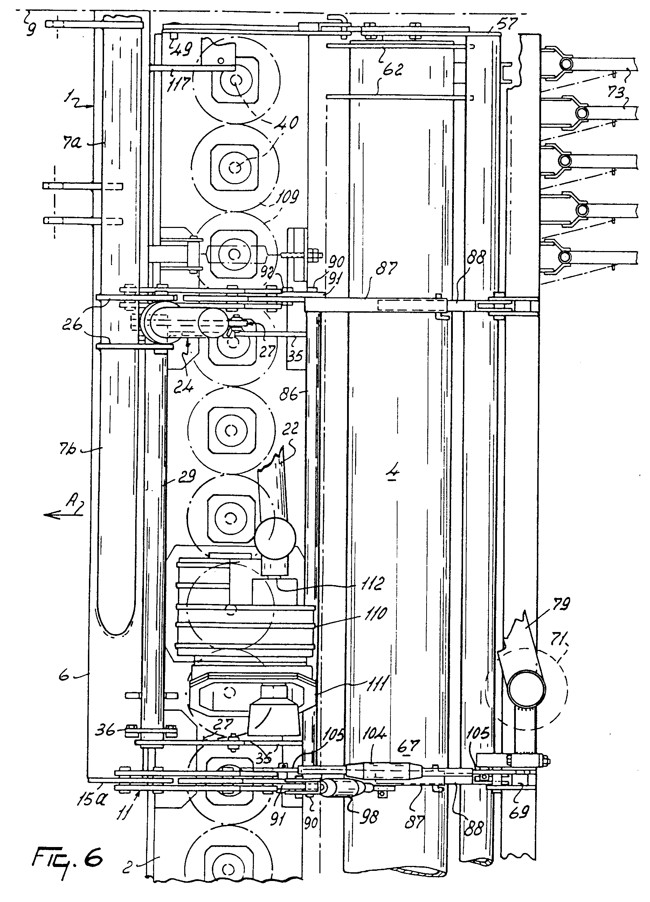

Figure 6 is a plan view of part of the left half of the machine, as shown in side view in Figure 5,
Figure 7 is a plan view of a soil cultivating machine according to the preferred embodiment, wherein parts of the machine are pivotable in height relative to a central frame section for the purpose of transport thereof;
Figure 8 is a front view of the soil cultivating machine, taken in the direction of the arrow VIII in Figure 7, one frame portion having been shown in the transport position;
Figure 9 schematically shows in plan view the positioning of the distributing mechanisms during operation as well as, in interrupted lines, a possible positioning after adjustment;
Figure 10 schematically shows in rear view the positioning of the distributing mechanisms during operation as well as a possible positioning in the transport position of the machine;

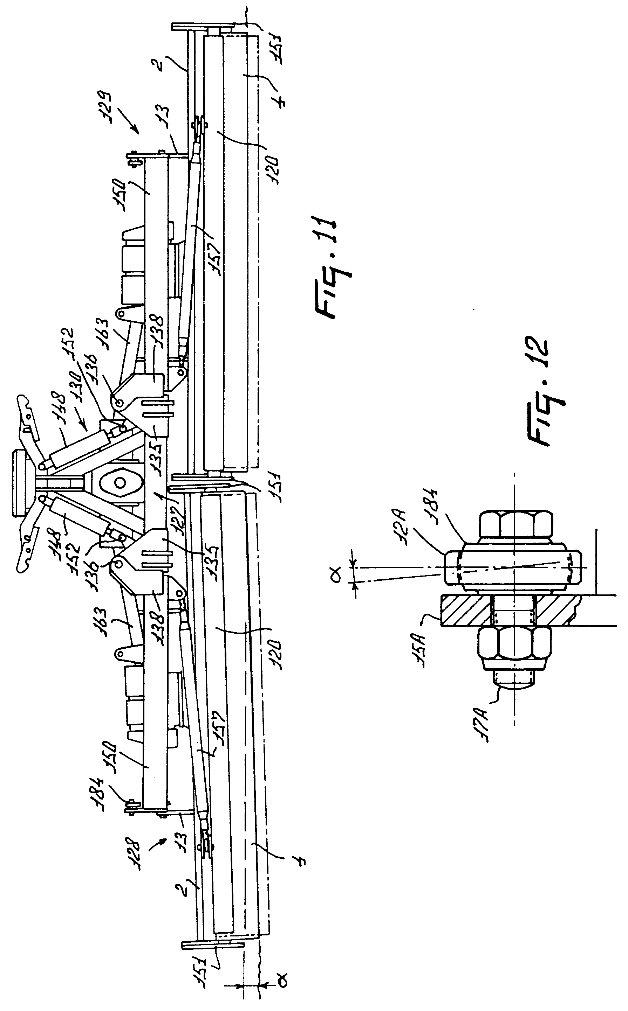

Figure 11 shows in front view a possibly occurring position of a frame portion relative to the frame during operation, and
Figure 12 shows in detail a ball joint connection of the parallelogram structure, by means of which a frame portion is connected to the frame.

In the drawings, corresponding parts have been denoted by the same reference numerals.

The invention is by no means limited to the embodiments shown and described herein; they only serve as an illustration of the inventive idea.

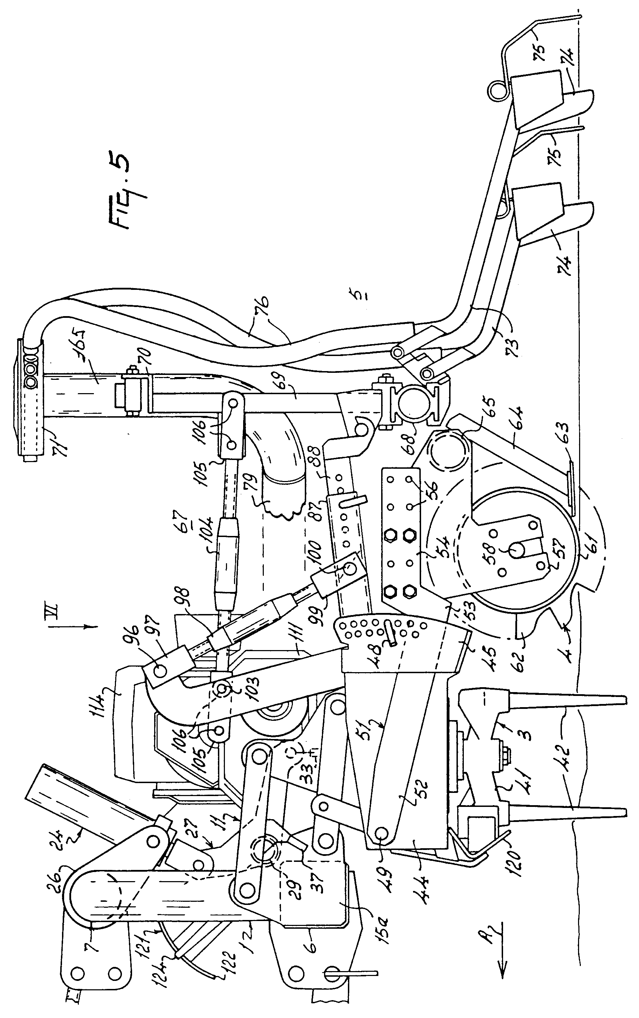

The implement shown in the drawings relates to a soil cultivating machine, in particular to a machine for preparing a seed bed. The machine comprises a frame 1, which in known per se manner is provided with attachment portions for coupling to the three-point lifting hitch of a tractor and extends transversely to the direction of operative travel of the tractor. At the frame 1 there are arranged two frame portions 2 which are provided with power-driven rotors 3, which are rotatable about vertical shafts, for working the soil. At the rear side of each of the frame portions 2 there is mounted a roller 4. Furthermore, to both frame portions 2 there may be coupled a seed drill 5 (Figure 5), which extends at least substantially parallel to the frame 1 and to the frame portions 2.

Each of the frame portions 2, each of the rollers 4 and the seed drill have a working width of 3 metres. Because of the size and the weight of the aforementioned combination, the frame 1 is of a heavy and reinforced construction. The frame 1 is trestle-shaped and includes a square lower frame beam 6 and, extending substantially parallel thereto, a round upper frame beam 7, the latter being connected to the former by means of two square struts 8. The upper frame beam 7 consists of a horizontally extending straight central portion 7a and, extending obliquely downwardly on either side thereof, two straight end portions 7b, the lower ends of which are welded onto the lower frame beam 6. From its centre 9, the horizontal upper frame beam portion 7a extends through at least a quarter of the width of a frame portion 2. On either side of the centre 9 of the frame 1 there are arranged at some interspace two parallelogram partial structures 11, which together will be called "parallelogram structure" in what follows. Via these parallelogram partial structures, the relevant frame portions 2 are connected to the frame 1. This construction ensures that, upon a movement in height, a frame portion 2 remains in a straight position relative to the frame 1. Each parallelogram partial structure 11 comprises two pairs of superjacent arms 12a, 12b, the one ends of which arms are arranged capably of pivotal movement at a supporting element 13 designed as an attachment plate and provided on the top side of a frame portion 2, the said supporting element 13 extending parallel to the centre line 9 and being upwardly directed, while the other ends of said arms are arranged capably of pivotal movement in two superjacent attachment points 17a and 17b on an attachment plate 15 which is mounted on the lower frame beam 6. Of each pair, the respective arms 12a, 12b are always arranged on either side of the said attachment plates or supporting elements 13, 15. Seen in side view, the pivot points 14a, 14b connected to the frame portion are located behind the centre 20 of the relevant frame portion. Furthermore, the parallelogram partial structure is such that the upper arm 12a, relative to the lower arm 12b, is shifted in the direction of operative travel. Of the two pivot points 17a, 17b connected to the lower frame beam 6, the lower pivot point 17b is located behind and level with the said lower frame beam 6, while the upper pivot point 17a is located directly thereabove. The parallelogram partial structure pivot points located at the outer end of the lower frame beam 6 are arranged in an attachment plate 15a, which closes the end of the said frame beam. The parallelogram partial structures at the inner side of the frame are attached to a plate 15b, wherein there is arranged a fitting recess to provide a fixation around the lower frame beam 6.

In addition to the parallelogram partial structure, the connection between the frame portions 2 and the frame 1 comprises a lifting device 24 which is driven by means of an operating cylinder 25. By means of this lifting device 24, a frame portion 2 can be moved in height relative to the frame 1. The operating cylinder 25 is arranged capable of pivotal movement between two lugs 26 welded onto the horizontal upper frame beam portion 7a. On either side of the centre 9 of the frame 1, and at a distance of approximately one third of the length of a frame portion, there is provided a cylinder 25. The lifting device 24 furthermore includes a lever mechanism 27 consisting of a lever 28 and a pipe 29, which pipe is supported capable of pivotal movement in a fittingly round aperture provided in supporting plates 30 which are directed upwardly and parallel to the centre line 9 of the machine. The supporting plates 30 are attached to the lower frame beam 6 at some interspace. By means of its, relative to the direction of operative travel, front lever arm 28a, the lever 28 is connected pivotably to the rod 31 of the lifting cylinder 25. The rear lever arm 28b located behind the pivot point 32 is connected to the frame portion 2 by means of a chain 33. The chain 33 is connected to the frame portion 2 via a lifting plate 35 which extends upwardly and parallel to the centre line 9, and which is arranged over substantially the entire width of the frame portion 2. By means of a coupling link, the chain 33 engages the frame portion 2 in the vicinity of the transverse centre line 20 thereof. The lever movement produced by the cylinder 25 is transferred via an extension of the pipe 29, by means of which the lever 28 is supported pivotably, to a further outwardly located, identical pivot point of the lever mechanism 27. In the same position, there is fixed to the pipe 29 in this pivot point a rear lever arm 28b only. In the same manner as described in the foregoing, this rear lever arm 28b is connected to the frame portion 2, so that, during lifting, a frame portion 2 is engaged in two interspaced points. In both pivot points 32, the pipe 29 is locked in the supporting plate 30 by means of a locking plate 36, which has also a fittingly round aperture and is attached over the pipe against the supporting plate 30. The outer rear lever arm 28b is located, from the outer end of a frame portion, at rather more than one third of the frame portion width. The lever mechanism 27 as a whole is located between the arms of the two parallelogram partial structures 11, by means of which the frame portions 2 are connected to the frame 1. The lifting device 24 allows of a movement in height of a frame portion 2 relative to the frame of approximately 24 cms. In the upward direction, the movement of a frame portion 2 is limited in that its top side contacts the supporting plate 15a, 15b, by means of which the arms 12a, 12b are connected to the lower frame beam 6. In the downward direction, the movement of a frame portion 2 is limited in that the upper parallelogram arms 12a contact a stop 37 provided at the rear side of the supporting plate 15b.

Each of the frame portions 2, which are in alignment, supports at least substantially vertical shafts 40 of soil working members 3, which shafts are located at equal interspaces of preferably 25 cms. At the end of a shaft 40 projecting from the bottom side of a frame portion 2, each of the soil working members 3 includes an at least substantially horizontal carrier 41, said carrier having near its ends downwardly extending soil working elements 42 preferably in the form of tines. The ends of each of the respective frame portions 2, which have a hollow profile, are closed by means of end plates 44 which extend upwardly and at least substantially parallel to the direction of operative travel A of the machine in a vertical plane. These plates 44 extend beyond the frame portion profile both upwardly and rearwardly. At the top, the plate edge extends from approximately 7 cms above the front side of the frame portion 2 obliquely rearwardly to approximately 12 cms above the rear side thereof. Measured from the top edge of the frame portion 2, the plate 44 extends at its rear end approximately 12 cms beyond the profile thereof. In the vicinity of the rear edge of the frame portion 2, there is arranged against the outside of the end plate 44 a parallel plate 45 which, according to the same measurements as of the rearwardly extending end plate, extends parallel thereto but at some distance therefrom. About pins 49 there is arranged freely pivotably a roller arm 51 which extends rearwardly along the outside of the plate. The combination of end plate 44 and parallel plate 45 ensures that the movement of the roller arms 51 is guided in a vertical plane and that this movement remains limited to a vertical pivoting about the said pins 49.

Between the lower portions of hook-shaped plates 57 attached to arm end portions 54, there is arranged freely rotatable the roller 4 by means of shafts 58, which are supported in bearing housings. In this embodiment, the roller 4 is in the form of a packer roller which comprises a cylindrical portion 61 having at its outer circumference equally interspaced crowns of cams 62. Between the respective crowns of cams 62 there are located scrapers 63. Each of the scrapers 63 is present at the lower end of an obliquely upwardly and rearwardly extending arm 64. The arms 64 together are attached to a carrier 65, which extends at least substantially parallel to the axis of rotation of the roller 4.

On each frame portion 2 there is arranged by means of an adjustable, but rigid carrier structure a carrier beam 68 for the seed drill 5, which carrier beam 68 extends transversely to the direction of operative travel A and through the entire working width of a frame portion 2. On the outer half of each carrier beam 68 there is secured a square upright beam 69, at the upper end of which there are provided clamping means 70, by means of which a distributing mechanism 71 can be supported. The carrier beam 68 is located at least substantially parallel to a frame portion 2. On the carrier beam 68 there are attached side by side seed tubes 73, which at their lower ends are provided with seed coulters 74. Seen transversely to the direction of operative travel A of the machine, the seed coulters 74 are arranged alternatingly in a shifted position relative to each other, while at the rear sides thereof there are provided resilient tines 75. By means of a flexible tube 76, each of the seed tubes 73 is connected to the distributing mechanism 71 of a pneumatic seed drill. Each of she distributing mechanisms 71 is connected to a hopper. The hopper and a fan are mounted on a frame arranged at the lifting hitch provided at the front side of the tractor.

The seed drill carrier structure 67 comprises a rigid framework consisting of one front round beam 86 and two square hollow beams 87 fixed against the ends thereof. The round beam 86 extends near the rear side of a frame portion 2 thereabove and parallel thereto, namely between the two upright attachment plates 13. The two side beams 87 extend along the longitudinal centre line 9 of the machine. At the rear ends of the beams 87 there is telescopically slidable thereinto a square beam 88 of smaller dimension. The beams 87 and 88 can be fixed relative to each other by means of a pin/aperture connection having a plurality of apertures. At the rear end of the smaller beam 88 there are fixed two lugs having a hook-shaped lower end. This construction allows of a pivotal connection. The hook is suited to support a pin which can be inserted through two lugs attached to the upright beam 69 of the seed drill 5. At their front ends, the side beams 87 of the aforementioned framework are pivotable about a shaft 90 that is arranged in an extension plate 91. By means of two heavy bolts 92, this extension plate 91 is screwed rigidly against the lower end of the supporting plate 13. The, relative to the centre 9 of the machine, most outwardly extension plate 91 is designed so as to have a portion 94 extending upwardly behind and around the lower pivot point 14b, which portion, at its upper side, merges into a rearwardly extending beak-shaped portion 95. In the beak-shaped portion 95 there is provided an aperture 96 which is suitable to be pivotably connected to a coupling link 97 of an adjustable link 98. By means of a single lug 99 that can be slipped around a shaft 100 onto the relevant side beam 87, the adjustable link 98 is connected at its other end to the aforementioned framework. Thus, by turning the adjustable link 98, it is possible to effect a height adjustment of the seed drill 5 relative to the relevant frame portion 2. It may be obvious that the rigid connection between the side beams 87 and the intermediate round beam 86 together with the two pivot points at the frame portion 2 ensure that the height adjustment is transferred to two spaced apart positions on the carrier beam 68 of the seed drill 5.

Near the top end of the upwardly extending portion of the outer extension plate 91, at approximately 10 cms below the beak-shaped portion, there is arranged a shaft 103. This shaft 103 is suitable for connecting thereto an adjustable link 104 having a lug end 105. This second adjustable link, which is of a lighter construction than the aforementioned one, has at its other end also a lug, by means of which it is attached to the upright beam 69 of the seed drill 5. It may be obvious that by means of this construction the position of the seed drill, and hence that of the seed coulters, can be influenced. Both lug ends 105 of the adjustable link 104 are provided with two bores 106, so that greater distance adjustments of the subjacent telescopic beams 87 and 88 can be followed.

Inside each of the frame portions 2 there are mounted on the shafts 40 of the respective soil working members cylindrical gearwheels 109, the arrangement being such that the gearwheels on the shafts 40 of adjacent soil working members 3 are in driving connection with each other. Near the centre, the shaft 40 of a soil working member 3 is extended upwardly and reaches by means of this extension to into a gear box 110, wherein transmission means are located. Inside the gear box 110, the extension is in driving connection via a bevel gear transmission with a shaft which extends transversely to the direction of operative travel and is supported in the gear box, the said shaft being in driving connection via a speed variator 111 located at the outside of the gear box with a central shaft 113, which also extends transversely to the direction of operative travel, of a central transmission box 114. Deliberately, the shaft 112 has been arranged not straight above the afore-mentioned extension, but in such a manner therebeside that it is present above the frame portion part which is located behind the centre. The driving connection between the two shafts 112 and 113 consists of a telescopic coupling shaft 22 provided with universal joints. The central transmission box 114 is mounted on a support located at the rear side of the frame 1. Inside the central gear box 114, the shaft extending transversely to the direction of operative travel A is in driving connection via a bevel gear transmission with a shaft 118 which extends in the direction of operative travel A and which projects from the gear box both at the front side and at the rear side. The shaft end projecting at the front side is connected to the power take-off shaft of the tractor via an intermediate shaft.

The soil cultivating machine as described in the foregoing operates as follows.

During operation, by means of the fan present at the front side of the tractor, the seed material supplied from the hopper is conveyed via the tubes 79 to the respective distributing mechanisms 71, after which it is introduced via the flexible tubes 76, the seed tubes 73 and the seed coulters 74 into the freshly cultivated soil. Using the above-described implement, it is possible in one operating run to effectively cultivate a comparatively wide (approximately 6 meters) strip of soil and simultaneously sow same.

In an ideal working position of the frame portions 2, the arms of the parallelogram partial structures 11 are directed slightly rearwardly and downwardly, but substantially horizontally. In order to be able to check this position, there is provided an indicator means 121. This indicator means 121 comprises a scaled plate 122 directed towards the driver's seat of the tractor, which plate is connected via an arm 123 to the upwardly directed supporting plate 15b for the pivot connection of the parallelogram arms 12a, 12b with the lower frame beam 6. At the upper parallelogram arm 12a there is fixed a pointer 124, the pointed end of which is folded over the plate 122. The plate 122 includes two bright colours, the one of which is arranged on the central portion thereof and the other on the end portions. The folded point of the pointer 124 has a dark colour, so that at a single glance it can be checked whether the pointer is present above the central portion, i.e. that the frame portions are in a favourable working position. In case the pointer is not present above the central portion, then the lifting hitch of the tractor 18 has to be operated in such a way that the correct position is attained. During turning on the head land, however, this position need not be changed. Due to the presence of a separate lifting device for the frame portions, upon turning it is possible that only an upward and downward movement of the hydraulic system present for this device will suffice. During the "upward" movement, the hydraulic system moves the cylinder in such a way that the frame portions 2, and hence the seed drill 5 with the seed coulters 74, are lifted sufficiently high above the soil so as not to be damaged or dislocated by contact therewith upon turning. After turning, by the "downward" movement there is automatically returned to the earlier attained favourable working position, which is attained by means of the lifting hitch of the tractor. The hydraulic system of the lifting device for the frame is such that the two cylinders can be lifted simultaneously and to the same extent.

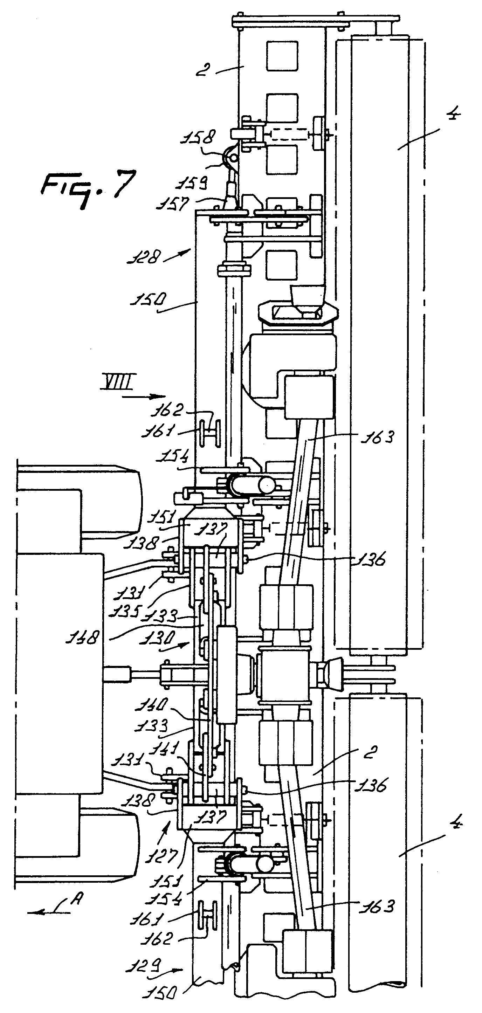

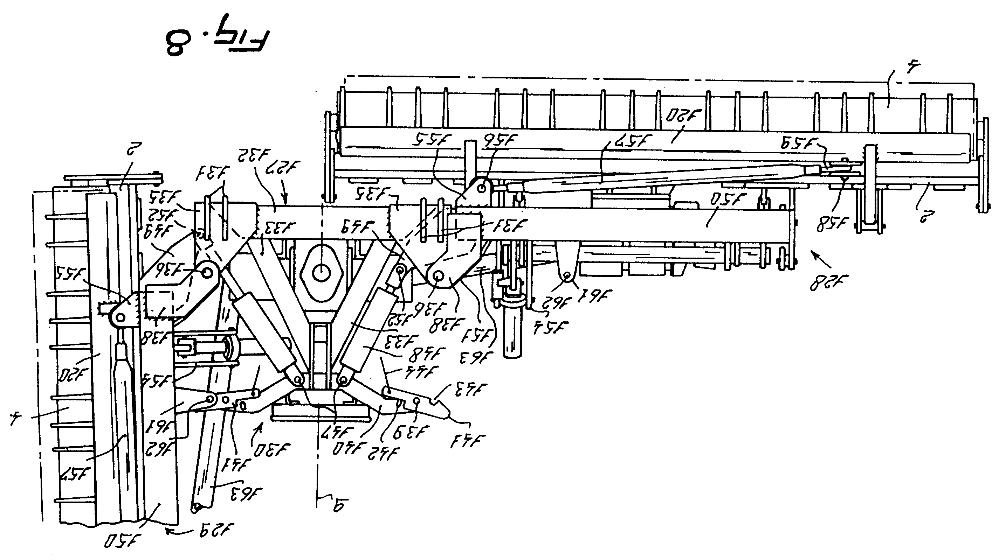

In the preferred embodiment, as has been shown inter alia in Figures 7 and 8, the machine frame consists of three sections 127, 128 and 129. In what follows, this frame will be indicated by the term "main frame" and the individual sections thereof by the term "main frame section". The three sections of the main frame are a central main frame section 127, which includes a trestle 130 having pairs of lugs 131 for the purpose of coupling to the three-point lifting hitch of a tractor 18, and on either side thereof further main frame sections 128 and 129, each of which is connected pivotably at one end to the central main frame section 127. In a corresponding manner as in the first embodiment, to each of the main frame sections 128, 129 there is connected a frame portion 2 having drivable soil working members 3 fitted therein.

The trestle 130 of the central main frame section 127 is constituted by a horizontal frame beam 132 and two shores 133 which in the shape of an inverted V are arranged at each other and at the frame beam 132. The ends of the frame beam 132, which has a square profile, are made oblique at an angle of approximately 45°, so that the upper side of the frame beam 132 is shorter than its lower side. To the front and rear ends of the frame beam 132 there are attached pivot plates 135, which extend sidewardly beyond the frame beam 132 approximately 7 cms and upwardly approximately 21 cms. At approximately 16 cms above a frame beam end there are arranged in the plates 135 apertures to accommodate a pivot shaft 136 connecting the central main frame section 127 to a further main frame section 128, 129. The shaft 136 is arranged in a bushing 137 which, after having been passed through fitting apertures in the plates 135, is rigidly connected thereto and which extends fittingly between two pivot plates 138 of a main frame section 128, 129. The distance between the two pivot shafts 136 is 105 cms. In order to ensure a long-lasting and smooth pivotal movement, between the shaft 136 and the bushing 137 there are fitted rings of synthetic material.

Against the top end of the trestle 130 there is arranged a transversely extending arm 140, cut from thick steel plate, which arm, for the purpose of a rigid connection, is also connected to the rear side of the upper lugs 131 of the trestle 130. The arm 140, which in front view is wing-shaped, comprises a horizontally extending central portion which, at approximately 10 cms from the centre of the machine, merges on either side via a bend into a substantially obliquely upwardly directed portion, at the end of which there is arranged pivotably about a shaft 139 a locking hook 141. The locking hook 141 is movable in a vertical plane and bears with its upper side against a stop 142 fastened to the arm 140 between the shaft 139 and the centre line 9 of the machine. The outer end of the hook 141 constitutes an oblique face, the upper side of the hook 141 being longer than its lower side. The locking hook 141 is furthermore provided at its one end with a recess 143 and at its other end with a length of rope 144, by means of which the latter end can be pulled in the downward direction.

In the position of the bend in the arm 140 there is arranged an aperture to accommodate a shaft 147 which connects a pair of lugs of the housing of an adjusting cylinder 148 to the arm 140, and hence to the trestle 130. In the operative position, the adjusting cylinder 148 extends parallel to one of the shores 133 of the trestle 130 and, via the free end of the piston rod, is connected to a lever plate 149 of a relevant main frame section 128, 129.

Each of the main frame sections 128, 129 comprises a frame beam 150 having the same size as the lower frame beam 132 of the trestle 130. At its front and rear sides, the frame beam end bordering on the central main frame section 127 is provided with pivot plates 138. At the level of the upper side of the frame beam 150, these pivot plates 138 diverge at an angle of approximately 45° with a vertical and at some height above the beam are bent again in a vertical plane. The vertically bent portion of the pivot plate 138 extends in transverse direction to the space above a lower pair of lugs 131 of the trestle 130. The pivot plates 138 are provided with an aperture fitting for the shaft 136 and are interspaced at such a distance that the bushing 137 accommodating the pivot shaft 136 is enclosed fittingly. Between the pivot plates 138 there is furthermore provided a strengthening plate 151.

Against the frame beam end face bordering on the central main frame section 127 there is arranged a lever plate 149 which extends in a vertical plane from the lower side of the beam 150 obliquely upwardly and in the direction of the centre line 9. A part of the edge of the plate 149 borders on the oblique end of the central frame beam 132 at some distance therefrom and parallel thereto, while an other part extends at some distance from a shore 133 and parallel thereto. At approximately 15 cms above the main frame beam 132, the lever plate 149 is provided with an aperture to accommodate a shaft 152, via which the lever plate 149 is connected to the piston rod of the adjusting cylinder 148. At the upper side of a frame beam 150, the lever plate 149 extends below the pivot shaft 136 and between the pivot plates 138 inwardly, so that the lever plate 149 is connected partly to the upper side of the frame beam 150.

At approximately 90 cms from the centre line 9 of the machine there is arranged pivotably at a frame beam 150, between two lugs 154 extending to the space thereabove and therebehind, an adjusting cylinder 25. This adjusting cylinder 25 operates a lever mechanism 27 for lifting a frame portion 2, which lever mechanism 27 corresponds to that of the first embodiment.

At its end bordering on the central main frame section 127, a frame beam 150 is connected at its lower side, via a downwardly extending pair of lugs 155 and a shaft 156 extending in the direction of operative travel, to a stabilizer rod 157 which extends obliquely rearwardly and downwardly to a shaft/lug construction 158 arranged against the front side of a frame portion 2 at approximately a quarter of the length thereof, taken from its outer end. For the coupling to a shaft/lug connection, the stabilizer rod 157 is provided on either end with an eyelet 159 screwed therein. The eyelets 159 include a screw portion to be screwed into a threaded end portion of the stabilizer rod 157. This allows of a change in length of the stabilizer rod 157 by turning same between the eyelets 159.

On the upper side of the frame beam 150, at approximately one third of its length, taken from the inner end, there are provided two lugs 161. These lugs 161 are rigidly interconnected at their top ends by means of a pin 162 extending in the direction of operative travel A. When a frame portion 2 is moved to the transport position, the pin 162 contacts the oblique face of the locking hook 141 and urges the locking hook upwardly, after which the pin 162 is caught by the recess 143.

At the rear side of the central main frame section 127 there is arranged via shores 117 a transmission box 114. The transmission box 114 includes two sideward shaft exits, to which are coupled sidewardly, rearwardly and downwardly extending coupling shafts 163, by means of which are driven the soil working members 3 of the two frame portions 2. These two shaft exits of the central transmission box 114 are located behind the transverse centre of a frame portion 2.

It is possible to provide a frame portion 2 with a seed drill 5. The present seed drill 5 differs from the one already described by a pivotable attachment construction of the supply tube or vortex tube 165, to which the distributing mechanism 71 is fitted.

In the positions of the pivot points 14A, 14B, 17A, 17B of the arms 12a and 12b of the parallelogram structure 11 there are arranged ball joints 184, as shown in Figure 16. Using these, as is shown in Figure 15, it is ensured that each of the two parallelogram structures 11, by means of which a frame portion 2 is coupled to the frame 1 or to a frame section 128, 129, can be moved in height to some extent, independently of each other. As a result, it is possible that a frame portion 2 adapts itself at an angle with a horizontal to a local unevenness in the soil, as has been indicated in Figure 5 for the left-hand frame portion 2. In the case of unevennesses in the soil surface, the use of ball joints 184 prevents the arms 12a, 12b and the plates 15 from bending, or eventually breaking, due to the weight of a frame portion 2 inclined at an angle with the frame. Such a construction using ball joints is of particular importance when there are coupled to a main frame several frame portions 2 having soil working members 3, like in the present case.

Ensuing from their nature, the ball joints 184 afford a frame portion 2, in addition to the said freedom of movement in the vertical direction, also a freedom of movement in the horizontal direction. This is undesirable, in particular in the present embodiments wherein, during operation, two heavily shaking frame portions 2 are active at a very short interspace. Therefore, according to the invention, the freedom of movement of a frame portion 2 in the horizontal direction is limited to a considerable extent by means of the stabilizer rod 157. The stabilizer rods 157 are designed as adjustable links, by means of which there can be obtained such an adjustment of a frame portion 2 relative to the frame that, when a frame portion 2 is in an oblique position as shown in Figure 15, the facing ends of the rollers 4, or their facing arms, do not contact each other.

Furthermore, regardless of the manner of suspension of a frame portion 2 relative to a main frame section, the stabilizer rod 157 has a function of relieving this suspension in machines which are foldable in sections for the purpose of transport. During transport, the carrier structure is loaded in a direction which is at least substantially parallel to the pivot pins thereof. As a result, the arms 12a, 12b may bend and the ball joints, if applied, may be dislocated.

The machine according to the preferred embodiment can be adjusted to a transport position by activating the hydraulic cylinders 148. Then, the shaft 152 is pushed downwardly, which allows a main frame section 128, 129 together with a frame portion 2 to move about the pivot shaft 136. At the end of the movement, the frame beams 150 are directed towards each other with their free ends at an angle of 2 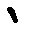 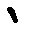 with a vertical. Due to this measure, the total width of the machine in the transport position is brought within the legally allowed limit, which in many countries is 3 metres.

In foldable machines provided with a seed drill 5 is of importance the construction in which the distributing mechanisms 71 are located both at the left-hand side or at the right-hand side of the centre of a frame portion 2. As a result, it is possible to adjust the machine to the transport position, without a distributing mechanism 71 colliding with that of the opposite frame portion 2 or getting entangled in the seed supply tubes 76 thereof. However, it is possible to locate the distributing mechanisms 71 at various distances from the pivot point 136, relative to which a frame portion 2 provided with seed drill is pivotable.

In the foldable design of the machine, the distributing mechanism support 177 is pivotable. Simultaneously with the folding of the machine, an adjusting cylinder for the distributing mechanism support is activated, as a result of which the distributing mechanism 71 is moved over approximately 40° rearwardly.

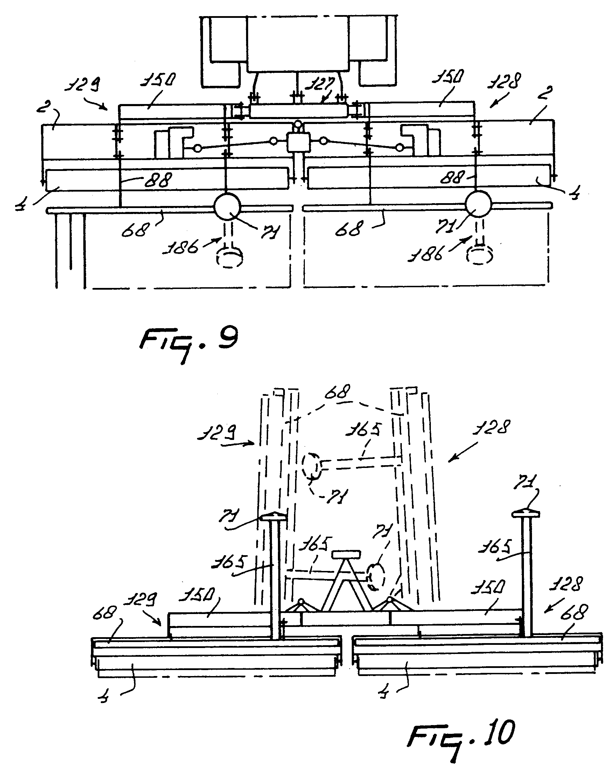

Due to its adjustment, the distributing mechanism 71 is brought so far rearwardly (see position 186 in Figure 9) that it is located behind the space above the carrier 68 and the pivot points of the seed tubes 73 therewith (see the side view of Figure 5). The said angle of adjustment means that the frame portions 2 can be arranged in the transport position as indicated by interrupted lines in Figure 10, without a distributing mechanism colliding with a carrier 68 of the opposite seed drill 5 or with the seed tubes 73 thereof. In establishing the said angle, it has been taken into account that the folding of the machine is preceded by a lifting movement for removing the rotors 42 and the seed coulters 74 from the soil. Furthermore, the said angle applies to the highest possible position to be attained by the carrier 68 via the adjustable link 98. In the highest position of the carrier and in the lifted condition of the rotors 42, the carrier 68 is located level with a main frame beam 150.

## Claims

1. A soil cultivating machine comprising a frame (1) and frame portions (2) which are provided with soil working members (3), the frame (1) consisting of a central section (127) and at least two further sections (128, 129), which further sections (128, 129), taken in the direction of operative travel of the machine, are connected on either side of the central section (127) via a shaft (136) to said central section (127) and are movable in height about the said shaft (136), and to each of which further sections (128, 129) there is connected via a hingeable carrier structure (11) extending lengthwise in the direction of operative travel, a frame portion (2) with soil working members (42), characterized in that a vertically movable frame section (128, 129) is connected to the relevant frame portion (2) with soil working members (3) via a length adjustable stabilizer rod (157) which extends substantially transversely to the intended direction of operative travel of the machine and substantially in the elongate direction of the said frame section and said frame part.

2. A soil cultivating machine as claimed in claim 1, characterized in that the coupling points of the stabilizer rod (157) have a freedom of movement in a plane substantially transversely to the longitudinal direction of the stabilizer rod (157), and in this plane transversely to the direction of operative travel of the machine.

3. A soil cultivating machine as claimed in claim 2, characterized in that the carrier structure (11) comprises a parallelogram structure (11).

4. A soil cultivating machine as claimed in claim 3, characterized in that the parallelogram structure (11) is coupled in two pivot points (17A, 17B) to the frame and in the other two pivot points (14A, 14B) to the frame portions (2).

5. A soil cultivating machine as claimed in claim 3 or 4, characterized in that there are present supporting elements (21) which are rigidly connected to a frame portion (2), in which supporting elements (21) are located the pivot points (14A, 14B), by means of which the parallelogram structure (11) is coupled to the relevant frame portion (2).

6. A soil cultivating machine as claimed in claim 5, characterized in that the lower pivot point (14B) of the parallelogram structure (11) in the supporting elements (21) is located behind the centre (10) of the relevant frame portion (2).

7. A soil cultivating machine as claimed in claim 5 or 6, characterized in that the supporting elements (21) are designed in the form of a plate.

8. A soil cultivating machine as claimed in any one of claims 5 to 7, characterized in that a supporting element (21) is of such a shape that therebehind, but at least in the position thereof above the frame portion (2), a coupling shaft (22, 163) required for the drive of the soil working members (42) can extend.

9. A soil cultivating machine as claimed in any one of the preceding claims, characterized in that there are present central transmission means (114) which can be coupled to the power take-off shaft of a tractor (18) or a similar suchlike vehicle, as well as further transmission means (110) arranged on the relevant frame portions (2), each of which further transmission means (110) is coupled via a coupling shaft (22, 163) to the central transmission means (114), by means of which further transmission means (110) the soil working elements (42) can be driven.

10. A soil cultivating machine as claimed in claim 9, characterized in that the central transmission means (114) are located in a box connected to the frame (1; 127, 128, 129), while the coupling point of the coupling shafts (22, 163) on the central transmission means (114) is located behind the centre (10) of the relevant frame portions (2).

## Patentansprüche

1. Bodenbearbeitungsmaschine mit einem Rahmen (1) und Rahmenteilen (2), die mit Bodenbearbeitungsgliedern (3) versehen sind, wobei der Rahmen (1) aus einem mittleren Teilstück (127) und mindestens zwei weiteren Teilstücken (128, 129) besteht, die in bezug auf die Arbeitsrichtung der Maschine beiderseits des mittleren Teilstückes (127) angeordnet und mit diesem über je eine Achse (136) höhenbewegbar verbunden sind, und wobei jedes der weiteren Teilstücke (128, 129) über eine gelenkige Tragkonstruktion (11), die sich in Arbeitsrichtung erstreckt, mit einem der mit Bodenbearbeitungsgliedern (3) versehenen Rahmenteile (2) verbunden ist,
dadurch gekennzeichnet, daß ein vertikal bewegbares Rahmen-Teilstück (128, 129) mit dem zugehörigen, Bodenbearbeitungsglieder (3) tragenden Rahmenteil (2) über eine längenverstellbare Stabilisierstange (157) verbunden ist, die sich im wesentlichen quer zur Arbeitsrichtung der Maschine sowie im wesentlichen in Längsrichtung des Rahmen-Teilstückes und des Rahmenteiles erstreckt.

2. Bodenbearbeitungsmaschine nach Anspruch 1,
dadurch gekennzeichnet, daß die Anschlußpunkte der Stabilisierstange (157) in einer im wesentlichen quer zur Längsrichtung der Stabilisierstange (157) verlaufenden Ebene und innerhalb dieser Ebene quer zur Arbeitsrichtung der Maschine ein Bewegungsspiel haben.

3. Bodenbearbeitungsmaschine nach Anspruch 2,
dadurch gekennzeichnet, daß die Tragkonstruktion (11) durch eine Parallelogrammkonstruktion (11) gebildet ist.

4. Bodenbearbeitungsmaschine nach Anspruch 3,
dadurch gekennzeichnet, daß die Parallelogrammkonstruktion (11) in zwei Gelenken (17A, 17B) mit dem Rahmen und in den beiden anderen Gelenken (14A, 14B) mit den Rahmenteilen (2) verbunden ist.

5. Bodenbearbeitungsmaschine nach den Ansprüchen 3 oder 4,
dadurch gekennzeichnet, daß Halterungselemente (21) vorhanden sind, die mit einem Rahmenteil (2) starr verbunden und an denen die Gelenke (14A, 14B) angeordnet sind, mittels derer die Parallelogrammkonstruktion (11) mit dem zugehörigen Rahmenteil (2) verbunden ist.

6. Bodenbearbeitungsmaschine nach Anspruch 5,
dadurch gekennzeichnet, daß das an den Halterungselementen (21) angeordnete untere Gelenk (14B) der Parallelogrammkonstruktion (11) hinter der Mitte (20) des zugehörigen Rahmenteiles (2) liegt.

7. Bodenbearbeitungsmaschine nach den Ansprüchen 5 oder 6,
dadurch gekennzeichnet, daß die Halterungselemente (21) plattenförmig sind.

8. Bodenbearbeitungsmaschine nach einem der Ansprüche 5 bis 7,
dadurch gekennzeichnet, daß ein Halterungselement (21) derart gestaltet ist, daß sich hinter ihm, zumindest in der Lage oberhalb des Rahmenteiles (2), eine zum Antrieb der Bodenbearbeitungsglieder (3) erforderliche Kupplungswelle (22, 163) erstrecken kann.

9. Bodenbearbeitungsmaschine nach einem der vorhergehenden Ansprüche,
dadurch gekennzeichnet, daß ein zentrales Getriebe (114), das mit der Zapfwelle eines Schleppers (18) oder ähnlichen Fahrzeuges zu verbinden ist, sowie weitere Getriebe (110) vorhanden sind, die an den zugehörigen Rahmenteilen (2) angeordnet sind, wobei jedes weitere Getriebe (110) über eine Kupplungswelle (22, 163) mit dem zentralen Getriebe (114) verbunden ist, und wobei mittels der weiteren Getriebe (110) die Bodenbearbeitungselemente (42) anzutreiben sind.

10. Bodenbearbeitungsmaschine nach Anspruch 9,
dadurch gekennzeichnet, daß das zentrale Getriebe (114) in einem Gehäuse angeordnet ist, das mit dem Rahmen (1; 127, 128, 129) verbunden ist, wobei die Verbindungsstelle der Kupplungswellen (22, 163) mit dem zentralen Getriebe (114) hinter der Mitte (20) der zugehörigen Rahmenteile (2) liegt.

## Revendications

1. Machine pour cultiver le sol comprenant un châssis (1) et des parties de châssis (2) qui sont munies d'organes de travail du sol (3) le châssis (1) se composant d'une section centrale (127) et d'au moins deux autres sections (128, 129), lesquelles autres sections (128, 129), vues dans le sens de marche du travail de la machine, sont reliées, de part et d'autre de la section centrale (127), par un arbre (136) à ladite section centrale (127) et sont mobiles en hauteur autour dudit arbre (136), et à chacune desquelles autres sections (128, 129) est reliée, par une structure porteuse articulée (11) s'étendant longitudinalement dans le sens de marche du travail, une partie de châssis (2) avec des organes de travail du sol (3),
**caractérisée** en ce qu'une section de châssis (128, 129) mobile verticalement est reliée à la partie de châssis (2) correspondante avec des organes de travail du sol (3) par une barre stabilisatrice (157) réglable en longueur qui s'étend sensiblement traversalement au sens de marche prévu pour le travail de la machine et sensiblement dans le sens longitudinal de ladite section de châssis et de ladite partie de châssis.

2. Machine pour cultiver le sol selon la revendication 1, caractérisée en ce que les points d'attache de la barre stabilisatrice (157) ont une liberté de mouvement dans un plan sensiblement transversal au sens longitudinal de la barre stabilisatrice (157) et, dans ce plan, transversalement au sens de marche du travail de la machine.

3. Machine pour cultiver le sol selon la revendication 2, caractérisée en ce que la structure porteuse (11) comprend une structure en parallèlogramme (11).

4. Machine pour cultiver le sol selon la revendication 3, caractérisée en ce que la structure en parallèlogramme (11) est couplée au châssis en deux points de pivotement (17A, 17B) et aux parties de châssis (2) par les deux autres points de pivotement (14A, 14B).

5. Machine pour cultiver le sol selon la revendication 3 ou 4, caractérisée en ce que sont présents des éléments de support (21) qui sont reliés rigidement à une partie de châssis (2), dans lesquels éléments de support (21) sont situés les points de pivotement (14A, 14B) au moyen desquels la structure en parallèlogramme (11) est couplée à la partie de châssis (2) correspondante.

6. Machine pour cultiver le sol selon la revendication 5, caractérisée en ce que le point de pivotement inférieur (14B) de la structure en parallèlogramme (11) dans les éléments de support (21) est situé derrière le centre (10) de la partie de châssis (2) correspondante.

7. Machine pour cultiver le sol selon la revendication 5 ou 6, caractérisée en ce que les éléments de support (21) sont conçus sous la forme d'une plaque.

8. Machine pour cultiver le sol selon l'une quelconque des revendications 5 à 7, caractérisée en ce qu'un élément de support (21) est d'une forme telle qu'un arbre de liaison (22, 163) requis pour l'entraînement des organes de travail du sol (3) peut s'étendre derrière cet élément de support, mais tout au moins dans la position de celui-ci au dessus de la partie de châssis (2).

9. Machine pour cultiver le sol selon l'une quelconque des revendications précédentes, caractérisée en ce que sont présents des moyens de transmission centraux (114) qui peuvent être couplés à l'arbre de prise de force d'un tracteur (18) ou autre véhicule similaire, ainsi que d'autres moyens de transmission (110) disposés sur les parties de châssis (2) correspondantes, chacun de ces autres moyens de transmission (110) étant couplé par un arbre de liaison (22, 163) aux moyens de transmission centraux (114), les éléments de travail du sol (3) pouvant être entraînés au moyen de ces autres moyens de transmission (110).

10. Machine pour cultiver le sol selon la revendication 9, caractérisée en ce que les moyens de transmission centraux (114) sont situés dans une boîte reliée au châssis (1; 127, 128, 129), tandis que le point de couplage des arbres de liaison (22, 163) sur les moyens de transmission centraux (114) est situé derrière le centre (10) des parties de châssis (2) correspondantes.
